# EUROPÄISCHE PATENTANMELDUNG

(11) **EP 1 400 784 A1**
(43) Veröffentlichungstag der Anmeldung: **24.03.2004**
(21) Anmeldenummer: 02020705.6
(22) Anmeldetag: 14.09.2002
(51) Int. Cl.: G01C 15/00, G01S 5/14, G01S 5/00, G06F 13/38, G06F 9/445, H04L 29/06

(54) **Verfahren und Vorrichtungen zur Nutzung von Daten in nicht direkt verarbeitbaren Datenformaten**

(71) Anmelder: Leica Geosystems AG, 9435 Heerbrugg (CH)
(72) Erfinder: Euler, Hans-Jürgen, 9435 Heerbrugg (CH)
(74) Vertreter: Kaminski, Susanne, Dr.

(57) **Zusammenfassung**

Zur Auswertung von Daten in nicht direkt verarbeitbaren Datenformaten, die zwischen geodätischen Geräten (8,9,9',11,11',15) kommuniziert werden, erfolgt eine Nutzung von Referenzverzeichnissen (10) und Datenverzeichnissen. Diese werden vorzugsweise in Zusammenhang mit der Übermittlung der Daten übertragen und indizieren auswertbare Datenfelder in Datenformaten. Empfängt ein geodätisches Gerät (8,9,9',11,11',15) ein nicht direkt verarbeitbares Datenformat, so können durch. das Referenzverzeichnis (10) auswertbare Datenfelder gefunden und durch ein Datenverzeichnis nicht auswertbare Datenfelder genutzt werden.

## Beschreibung

Die Erfindung betrifft ein Verfahren zur Verwendung von nutzbaren Daten in nicht direkt verarbeitbaren Datenformaten nach dem Oberbegriff des Anspruchs 1, ein geodätisches Gerät nach Anspruch 14 bzw. 16, ein geodätisches System nach Anspruch 20 sowie ein Computerprogrammprodukt nach Anspruch 10, ein Computer-Daten-Signal nach Anspruch 11 und ein Referenz- oder Datenverzeichnis nach Anspruch 12 bzw. 13.

In vielen geodätischen Anwendungen und Systemen besteht die Notwendigkeit der häufigen oder ständigen Übertragung von Daten zwischen verschiedenen Geräten. Dabei werden vorwiegend Daten mit zeitlichem oder räumlichem Bezug übertragen, die Parameter der Messung, Messwerte oder allgemeine Kommunikation, wie z.B. Meldungen über Fehler, beinhalten können. Beispiele solcher Daten sind die aktuelle Zeit, der Ort eines Messgerätes nebst evtl. vorhandener Referenzpunkte, sowie Richtung, Entfernung und Winkel zu Messpunkten. Die Übertragung kann dabei durch eine Vielzahl von geeigneten drahtgebundenen oder drahtlosen Kommunikationsmittel erfolgen, wie z.B. über eine direkte Kabelverbindung sowie gerichteten oder ungerichteten Datenfunk.

Ohne Beschränkung der allgemeinen Verwendbarkeit des erfindungsgemässen Verfahrens und der erfindungsgemässen Vorrichtungen soll hier die Anwendung für ein differentielles Global Navigation Satellite System (D-GNSS), wie z.B. dem Global Positioning System (GPS), als ein erläuterndes Beispiel dienen. Hierauf beziehen sich auch die rein exemplarisch dargestellten Datentypen und Datenformate, die allerdings mit einer ähnlichen Ausgestaltung in vielen weiteren Anwendungen genutzt werden können.

Beim differentiellen GNSS erfolgt die Positionsbestimmung einer mobilen Einheit, dem sogenannten Rover, durch Datenempfang und Datenmessung zu Satelliten so wie auch der Datenempfang von Datenmessungen von wenigstens einer Referenzstation.. Da die Position der Referenzstation bekannt ist und diese ebenfalls die identischen Signale der Satelliten empfängt, können durch dieses differentielle Korrekturverfahren einige Ungenauigkeiten und Fehler eliminiert werden. Durch dieses Verfahren ist eine höhere Genauigkeit möglich als sie mit einem Rover ohne Referenzstation möglich wäre. Eine solche Station übermittelt dem Rover fortlaufend Daten aus den empfangenen Satellitensignalen. Je nach Ausgestaltung können dies Rohdaten oder bereits aufbereitete Daten sein.

In der Praxis werden Referenzstationen jedoch meist nicht für jeden Messvorgang neu installiert, sondern es erfolgt eine Abstützung auf ein ganzes Netz festinstallierter Referenzstationen, die von verschiedenen Anwendern auch gleichzeitig genutzt werden können. Diese Stationen übertragen nun neben den satellitenbezogenen Daten und der Zeit auch spezifische Informationen über sich selbst, wie z.B. die eigene Referenzstations-Nr. Darüber hinaus ist es erforderlich, technische Daten, wie Z.B. Antennenparameter, oder Korrekturparameter zu übertragen. Beispiele für einen solchen Korrekturparameter stellen atmosphärische oder geometrische Korrekturen dar, die beispielsweise in einem Netzwerk von permanenten Referenzstationen und einer dazugehörigen Netzwerkauswertesoftware ermittelt wurden und nun zur Korrektur von Rovermessungen in Abhängigkeit von der Entfernung zu den beteiligten Referenzstationen verwendet werden kann.".

Da die Nutzung der Daten einer Referenzstation für verschiedene Rover möglich sein soll, erfolgt die Ausstrahlung der Signale ungerichtet. Damit entsteht allerdings die Forderung, dass die Kommunikation auch mit den verschiedenen Systemen im Ausstrahlungsbereich einer Referenzstation möglich sein muss, so dass eine Form der Standardisierung von ausgesandten Datenformaten notwendig ist.

Ein für eine solche Übermittlung von Daten genutzter Standard für herstellerunabhängige Datenformate wird von der Radio Technical Commission For Maritime Services (RTCM) in Alexandria, Virginia, USA festgelegt. Der Begriff Datenformat beschreibt eine abgeschlossene Informationseinheit zur Übertragung zwischen geodätischen Geräten. Der Informationsaustausch erfolgt mittels identischer oder verschiedener Datenformate auf identischen oder unterschiedlichen Datenfrequenzen. Der Begriff Datenfeld beschreibt einen abgeschlossenen, definierten Dateninhalt mit einem angegebenen Wertebereich. Datenformate setzen sich beispielsweise aus einer Anfangskennung, unterschiedlichen Datenfeldern und einer Abschlusskennung mit einer eventuellen Checksumme zur Datenprüfung beim Empfangen zusammen. Der Begriff Datentyp beschreibt die mögliche Ausprägung, wie zum Beispiel Länge, vorzeichenlos oder vorzeichenbehaftet, einer Informationseinheit. Datentypen werden zur Beschreibung von Datenfeldern verwendet.

Der bisher gültige Standard RTCM V2.x besteht aus einem oder mehreren Headern mit Datenfeldern als Grundinformation, an die optional Ergänzungen angehängt werden können. Das Auftreten solcher Ergänzungen in einem Datenformat wird durch sogenannte Flags als Indikatoren angezeigt. Dies bedeutet, dass jede übermittelte Nachricht nach ihrem Eingangsteil eine Sequenz aufweist, die dem Empfänger anzeigt, ob und ggf. welche weitere Ergänzungen folgen. Aus diesen Informationen weiss der Empfänger, wie er den Datenstrom zu interpretieren und zu verarbeiten hat.

Allerdings besitzt diese Lösung des Stands der Technik die Nachteile, dass die Zahl der möglichen Permutationen bei der verwendeten Zahl von Flags zwar relativ gering ist, aber trotzdem nicht jeder Hersteller alle möglichen Permutationen und die Verarbeitung der damit verbundenen Daten in seinen Geräten berücksichtigt hat.

Eine im Stand der Technik bekannte Lösung für die eingeschränkte Zahl von Flags besteht darin, Datenformate zu definieren, z.B. als ausgewählte Permutationen, und mit einer fortlaufenden Codierung zu versehen. Aus dieser zu Beginn der Mitteilung übertragenen Nummer kann ein Gerät das Datenformat als Sequenz verschiedener Datenfelder aus Datentypen ableiten und damit die Datenfelder auswerten.

Obwohl so der Adressraum und damit die Zahl der nutzbaren Mitteilungsvariationen gegenüber der Flag-Alternative deutlich erweitert werden kann, besteht die Problematik, dass in der Firmware der Geräte alle zu übermittelnden Varianten vorerfasst sein müssen. Empfängt ein Gerät eine Mitteilung bzw. Datenformat mit unbekannter Codierung, kann eine direkte Verarbeitung nicht mehr erfolgen, obwohl gegebenenfalls in der Sequenz von Datenfeldern auch durch dieses Gerät prinzipiell auswertbare Datenfelder mit nutzund verarbeitbaren Daten enthalten sind.

Eine solche Lösung erfordert bei einer Änderung der verfügbaren Mitteilungen durch Hinzufügen von neuen Datenformaten oder Ändern bestehender Datenformate zwangsläufig die Erstellung einer neuen Firmware-Variante durch alle Hersteller. Zudem muss diese neue Variante nach ihrer Erstellung auf alle Geräte aufgespielt werden, was einen hohen Koordinationsaufwand bedingt.

Diese am Beispiel des differentiellen GNSS dargestellte Problematik kann grundsätzlich auch bei der Kommunikation zwischen anderen geodätischen Geräten auftreten. Beispielsweise kann ein Theodolit mit einem weiteren Theodoliten und/oder intelligenten Reflektorsystemen Daten austauschen, wobei eine ähnliche Problemstellung auftritt, da auch hier Geräte unterschiedlicher Hersteller und unterschiedlichen Entwicklungsstandes kommunizieren und zusammenwirken müssen.

Die Aufgabe der vorliegenden Erfindung besteht in Bereitstellung eines Verfahrens bzw. zugehöriger Vorrichtungen und datentechnischer Elemente, die eine fortlaufende Veränderung eines Satzes von Datenformaten erlaubt.

Insbesondere soll erreicht werden, dass eine ständige Anpassung der auf den geodätischen Geräten vorhandenen Firmware aufgrund einer Überarbeitung oder Neugestaltung des Standards entfällt.

Eine weitere Aufgabe besteht darin, eine automatisierte Herbeiführung der Verarbeitbarkeit von nicht direkt verarbeitbaren Datenformaten zu bewirken.

Eine weitere Aufgabe besteht darin, eine Verarbeitbarkeit auch älterer Datenformate möglich zu machen.

Eine weitere Aufgabe besteht darin, eine Erweiterung der verwendbaren Datenfelder bzw. Datenformate durch Einführung neuer Datentypen zu ermöglichen.

Diese Aufgaben werden erfindungsgemäss durch die kennzeichnenden Merkmale der Ansprüche 1, 14 bzw. 16 sowie durch die kennzeichnenden Merkmale der Unteransprüche gelöst bzw. die Lösungen fortgebildet.

Die vorliegende Erfindung betrifft ein Verfahren, geodätische Geräte, ein geodätisches System sowie ein Computerprogrammprodukt, ein Computer-Daten-Signal und ein Referenz- oder Datenverzeichnis.

Die erfindungsgemäss zu übermittelnden Mitteilungen werden in einem Datenformat gesendet, das aus einer Sequenz von wenigstens zwei Datenfeldern besteht. Ein Datenfeld besitzt dabei eine grundsätzlich beliebige Länge, so dass die Datenfelder innerhalb eines Datenformates eine unterschiedliche Länge aufweisen können. Die Information in jedem Datenfeld wird in einem definierten Datentyp gespeichert. Innerhalb eines Datenformates können sich Datenfelder wiederholen, z.B. wenn gleichartige Daten mehrerer Satelliten hintereinander übertragen werden, oder aber die gleiche Information in mehreren Datenfeldern unterschiedlichen Datentyps abgelegt werden, z.B. bei der Übermittlung der Zeit in unterschiedlichen Darstellungsformen. Auch können in einer Mitteilung mehrere Indikatoren beinhaltet sein, wie z.B. Flags oder Parity Bits. Diese werden ebenfalls jeweils unter dem Begriff des Datenfeldes subsumiert.

Das Datenformat jeder Mitteilung kann anhand einer Codierung, die vorzugsweise numerisch oder alphanumerisch erfolgt, eindeutig bestimmt werden. In jedem erfindungsgemässen geodätischen Gerät, das zum Empfang der Mitteilungen ausgelegt ist, sind Mittel zur Verarbeitung nutzbarer Daten vorhanden, die einen Satz von diesem Gerät bekannten Datenfeldern auswerten kann. Ausserdem verfügt das Gerät über die Kenntnis einer bestimmten Anzahl von Datenformaten, d.h. sowohl die beinhalteten Datenfelder als auch deren Abfolge sind dem Gerät bekannt und können beispielsweise aufgrund der Codierung einer Mitteilung der Verarbeitung zugrunde gelegt werden. Diese Datenformate stellen damit einen Satz direkt verarbeitbarer Datenformate dar, die ausschliesslich über auswertbare Datenfelder verfügen. Der Begriff "auswertbar" bezieht sich hier darauf, dass durch das Gerät bzw. die darauf befindliche Firmware eine Erkennung und Auswertung der in diesem Datenfeld gespeicherten Daten geleistet werden kann. Dies erfordert nicht, dass die jeweiligen Daten nachfolgend tatsächlich für einen bestimmten Zweck verarbeitet werden. Der Begriff "auswertbar" bezieht sich somit auf die potentielle Nutzbarkeit der Daten im jeweiligen Datenfeld.

Unter dem Begriff "geodätisches Gerät" sollen in diesem Zusammenhang verallgemeinernd stets Vorrichtungen verstanden werden, die zur Messung oder Überprüfung von Daten mit räumlichem Bezug dienen oder eingerichtet sind. Insbesondere betrifft dies die Messung von Ort, Entfernung und/oder Richtung bzw. Winkeln zu einem oder mehreren Bezugs- oder Messpunkten. Dies betrifft nicht nur ausschliesslich terrestrische Systeme sondern auch solche, die Komponenten zur satellitengestützten Ortsbestimmung (bspw. GPS oder GLONASS) verwenden. Insbesondere sollen hier unter solchen geodätischen Geräten beispielsweise ortsfeste, mobile Referenzstationen oder bewegte Stationen, sogenannte Rover, aber auch kleinere, mobile Geräte wie Theodoliten sowie sogenannte Totalstationen als Tachymeter mit elektronischer Winkelmessung und elektrooptischem Entfernungsmesser verstanden werden. Gleichermassen ist die Erfindung zur Verwendung in spezialisierten Vorrichtungen mit ähnlicher Funktionalität geeignet, z.B. in militärischen Richtkreisen oder in der industriellen Bauwerks- oder Prozessüberwachung; diese Systeme werden hiermit ebenfalls unter dem Begriff "geodätisches Gerät" erfasst.

Erfolgt eine Ergänzung der bestehenden Datenformate durch das Hinzufügen neuer Datenformate, so können diese neuen Datenformate nicht direkt verarbeitet werden, da dem Gerät die Kenntnis des Aufbaus fehlt. Eine Anpassung und Ergänzung von Datenfeldern kann zum Beispiel für eine erhöhte Auflösung oder einen geänderten Wertebereich notwendig sein. Da auch ein optimaler Datendurchsatz und eine optimale Kommunikation berücksichtigt werden müssen, ist ein Ersatz der vorhandenen durch neudefinierte Datenformate vorteilhaft. Die neuen Datenformate können dabei aus einer Permutation der Datenfelder eines bekannten Datenformates bestehen oder aber auch eine neue Sequenz von Datenfeldern darstellen. Gegebenenfalls enthalten diese Datenformate auch neue Typen von Datenfeldern, die durch das Gerät weder erkannt noch genutzt werden können. Diese Datenfelder sind damit nicht auswertbar.

Damit bestehen die neuen, nicht direkt verarbeitbaren Datenformate aus einer Sequenz von auswertbaren und/oder nicht auswertbaren Datenfeldern.

Um dennoch eine Nutzung der nicht direkt verarbeitbaren Datenformate zu ermöglichen, muss das Gerät die auswertbaren Datenfelder identifizieren bzw. lokalisieren können. Erfindungsgemäss erfolgt deshalb bei einer bidirektionalen Kommunikation die Übermittlung eines Referenzverzeichnisses vorzugsweise in Zusammenhang mit dem Aufbau einer Kommunikationsverbindung zwischen den beteiligten Geräten, während für unidirektionale Verbindungen Teile des Referenzverzeichnisses auch verteilt über einen bestimmten Zeitraum und mit Wiederholungen mittels zu definierenden Datenformaten übertragen werden können. Weitere Anlässe für die automatisierte oder manuell ausgelöste Übermittlung des Referenzverzeichnisses können jedoch auch externe Vorgänge, wie z.B. die Meldung eines empfangenden Gerätes, das eine Mitteilung nicht verarbeiten kann, oder interne Vorgänge in dem sendenden Gerät sein, wie z.B. das Ablaufen eines Zählers oder das Erreichen einer Zeitmarke, wodurch insbesondere auch eine periodische Übertragung des Verzeichnisses bewirkt werden kann.

Das Referenzverzeichnis enthält zu jedem codierten Datenformat die Reihenfolge und die Typen der verwendeten Datenformate. Damit können auch innerhalb eines völlig neuen, nicht direkt verarbeitbaren Datenformates ein oder mehrere auswertbare Datenfelder genutzt werden. Somit wird eine indirekte Verarbeitbarkeit der neuen Datenformate ermöglicht.

Alternativ kann statt der direkten Angabe der Abfolge von Datenfeldern auch eine andere Notation verwendet werden. Beispielsweise können auch neue, nicht direkt verarbeitbare Datenformate aus den bekannten Datenformaten hergeleitet werden, indem die Änderungen angegeben werden. Insbesondere bei neuen Datenformaten, die lediglich als Aneinanderreihung kürzerer, bekannter Datenformate dargestellt werden können, bietet sich diese Notation an, da hiermit das Referenzverzeichnis kleiner gehalten werden kann. Auch ist die Angabe der Veränderung dann vorteilhaft, wenn bereits ein grosser Bestand an vergleichsweise kurzen Datenformaten vorliegt, der quasi modular komplexere Datenformate beschreiben kann. Insofern stellen diese kurzen Datenformate Meta-Datenfelder für übergeordnete, längere Datenformate dar.

Wird das Gerät bzw. die darauf befindliche Firmware so ausgelegt, dass diese auch neue Typen von Datenfeldern oder neue Datentypen auf der Basis wenigstens eines übermittelten Datenverzeichnisses verwenden können, so wird es möglich, auch Datenformate mit neuen Datenfeldern in vollem Umfang zu nutzen. Diese Datenverzeichnis kann grundsätzlich analog zu dem Referenzverzeichnis gestaltet und gehandhabt werden und neue Datenfelder oder Datentypen definieren. Gegebenenfalls kann auch die Definition von Datenfelder und Datentypen parallel in einem gemeinsamen Verzeichnis erfolgen. Neue Datenfelder können als erweiterte Beschreibungen von alten Datenfeldern eingeführt werden. Damit lässt sich zum Beispiel eine Bereichserweiterung oder auch eine Anpassung der Informationsauflösung erreichen.

Aus dem übermittelten Referenzverzeichnis folgt die Sequenz der Datenfelder, die nun bekannt und auswertbar oder neu und nicht auswertbar sein können. Während die auswertbaren Datenfelder bereits auf der Basis dieser Sequenzinformation lokalisiert und damit ausgewertet werden können, kann für die nicht auswertbaren Datenfelder deren Definition aus dem Datenverzeichnis entnommen werden, so dass auch die bisher nicht auswertbaren Datenfelder genutzt werden können. Grundsätzlich ist es möglich, sowohl beide Typen von Verzeichnissen in einem Verzeichnis zusammenzufassen, wie auch eine Einführung weiterer Ebenen der Datenbeschreibung und -definition zuzulassen und in gegebenenfalls zu übermittelnden weiteren Verzeichnissen abzulegen. Das Referenz- bzw. Datenverzeichnis kann erfindungsgemäss sowohl als eine Datei innerhalb eines Vorgangs oder aber auch stückweise verteilt über einen Zeitraum oder mehrere Vorgänge übertragen werden. Die Nutzung erfolgt dann bereits auf der Basis der stückweise übertragenen Anteile oder aber erst nach vollständigem Empfang des gesamten Verzeichnisses. Insbesondere kann bei einer unidirektionalen Kommunikation auch eine periodische Übertragung von kurzen Teilen des Referenz- und/oder Datenverzeichnisses erfolgen, wobei dieser Vorgang nach erfolgter vollständiger Ausstrahlung eines Verzeichnisses auch ständig, ggf. mit Unterbrechungen, wiederholt werden kann. Die Übertragung des Verzeichnisses gewinnt hierdurch einen quasi-kontinuierlichen Charakter. Auf diese Weise wird es für ein empfangendes Gerät möglich, nach einer gewissen Zeitdauer alle Teile des jeweiligen Verzeichnisses aus den ausgesandten Mitteilungen zu entnehmen und wieder zu dem vollständigen Verzeichnis zusammenzusetzen.

Das erfindungsgemässe Verfahren und zugehörige Geräte bzw. Verzeichnisse werden nachfolgend anhand von in der Zeichnung schematisch dargestellten Ausführungsbeispielen rein beispielhaft näher beschrieben. Im einzelnen zeigen
- Fig.1: eine Realisierungsform von Datenformaten mit Flags nach dem Stand der Technik;
- Fig.2: eine weitere Realisierungsform von Datenformaten mit einer numerischen Codierung nach dem Stand der Technik;
- Fig.3: zwei Gruppen von Datenformaten, von denen eine aus direkt verarbeitbaren Datenformaten, die andere aus nicht direkt verarbeitbaren Datenformaten besteht;
- Fig.4: eine erste Möglichkeit zur Nutzung auswertbarer Datenfelder in nicht direkt verarbeitbaren Datenformaten;
- Fig.5: eine zweite Möglichkeit zur Nutzung auswertbarer Datenfelder in nicht direkt verarbeitbaren Datenformaten;
- Fig.6: eine dritte Möglichkeit zur Nutzung auswertbarer Datenfelder in nicht direkt verarbeitbaren Datenformaten;
- Fig.7: eine schematische Darstellung eines erfindungsgemässen Referenzverzeichnisses mit unmittelbarer Angabe der Sequenz von Datenfeldern;
- Fig.8: zwei weitere Gruppen von Datenformaten, von denen eine aus direkt verarbeitbaren Datenformaten, die andere aus nicht direkt verarbeitbaren Datenformaten besteht;
- Fig.9: eine schematische Darstellung eines erfindungsgemässen Referenzverzeichnisses mit mittelbarer Angabe der Sequenz von Datenfeldern;
- Fig.10: eine schematische Darstellung der Handhabung von nicht auswertbaren Datenfeldern mit und ohne Verwendung eines Datenverzeichnisses;
- Fig.11: eine schematische Darstellung eines erfindungsgemässen Datenverzeichnisses zur Definition von Datentypen;
- Fig.12: eine schematische Darstellung eines erfindungsgemässen Datenverzeichnisses zur Definition von Datenfeldern;
- Fig.13: eine schematische Darstellung der Zusammenhänge von Datentypen, Datenfeldern und Datenformaten;
- Fig.14: eine schematische Darstellung eines erfindungsgemässen Datenverzeichnisses zur Definition von nicht auswertbaren Datenfeldern, wobei auf auswertbare Datenfelder zurückgegriffen wird;
- Fig.15: eine schematische Darstellung der Übertragung des Referenzverzeichnisses mit einem erfindungsgemässen Verfahren;
- Fig.16: eine schematische Darstellung des Empfangs und der Auswertung von in nicht direkt verarbeitbaren Datenformaten übermittelten Daten mit einem erfindungsgemässen Verfahren; und
- Fig.17: eine schematische Darstellung eines Theodoliten mit weiteren Geräten als erfindungsgemässes System.

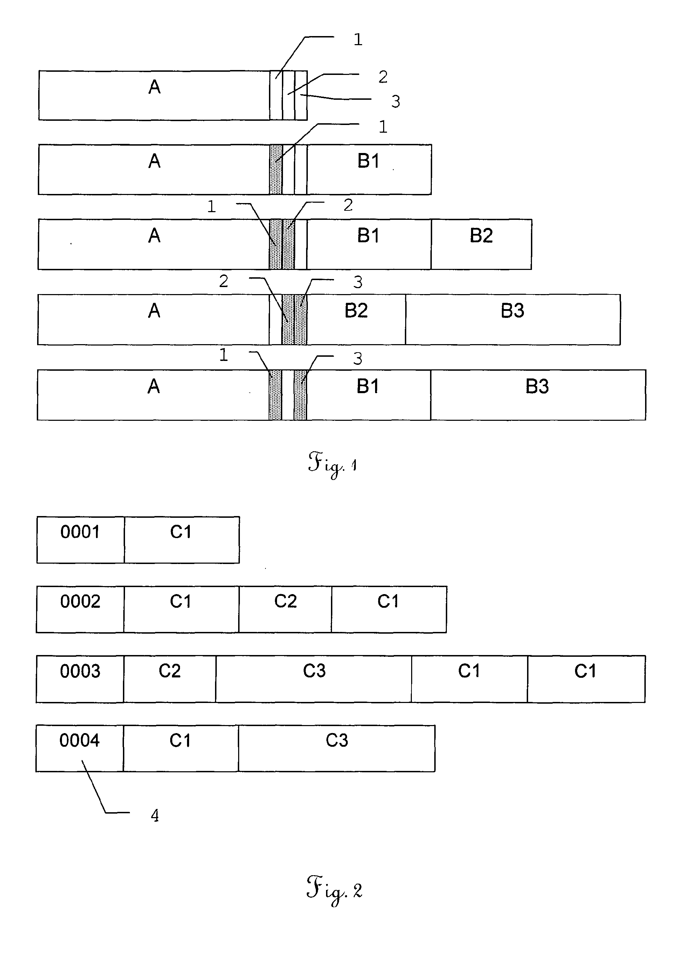

In Fig.1 wird schematisch der Aufbau eines geodätischen Datenformates des Stands der Technik mit Flags dargestellt. Ein Beispiel für eine solche Realisierungsform stellt der RTCM-Standard V2.3 dar. Nach einem für alle Datenformate identischen Anfangsteil A folgen ein erstes Flag-Bit 1, ein zweites Flag-Bit 2 und ein drittes Flag-Bit 3. Durch das Setzen eines der Flag-Bits, d.h. durch das Zuordnen des binären Wertes "Eins" für das jeweilige Bit, wird dem auswertenden Programm ein entsprechender angehängter Ergänzungsteil signalisiert. Im obersten Beispiel des Codeformates sind alle drei Flag-Bits 1,2 und 3 auf "Null" gesetzt, so dass ein Programm den Anfangsteil einer Mitteilung in diesem Format verarbeitet und dann keine weiteren Daten aus dieser Mitteilung mehr ausliest. Das darunter liegenden Datenformat weist ein auf "Eins" gesetztes erstes Flag-Bit 1 auf, welches anzeigt, dass ein Ergänzungsteil B1 folgt. Werden das erste Flag-Bit 1 und das zweite Flag-Bit 2 auf "Eins" gesetzt, wie im mittleren Beispiel gezeigt, folgen zwei Ergänzungsteile B1 und B2, wobei der Teil B1 stets vor B2 folgt. Die Reihenfolge der Ergänzungsteile wird auch bei Weglassung eines Ergänzungsteils bewahrt, wie in den beiden untersten Beispielen gezeigt wird. Durch die Verwendung der Flag-Bits kann damit eine Zahl von verschiedenen Datenformaten aus jeweils einem gemeinsamen Anfangsteil und einer der Zahl von Flag-Bits entsprechenden Menge von zusätzlichen Ergänzungsteilen abgeleitet werden, wobei die Ergänzungsteile auch grundsätzlich mehrere Datenfelder in fest definierter Folge umfassen können.

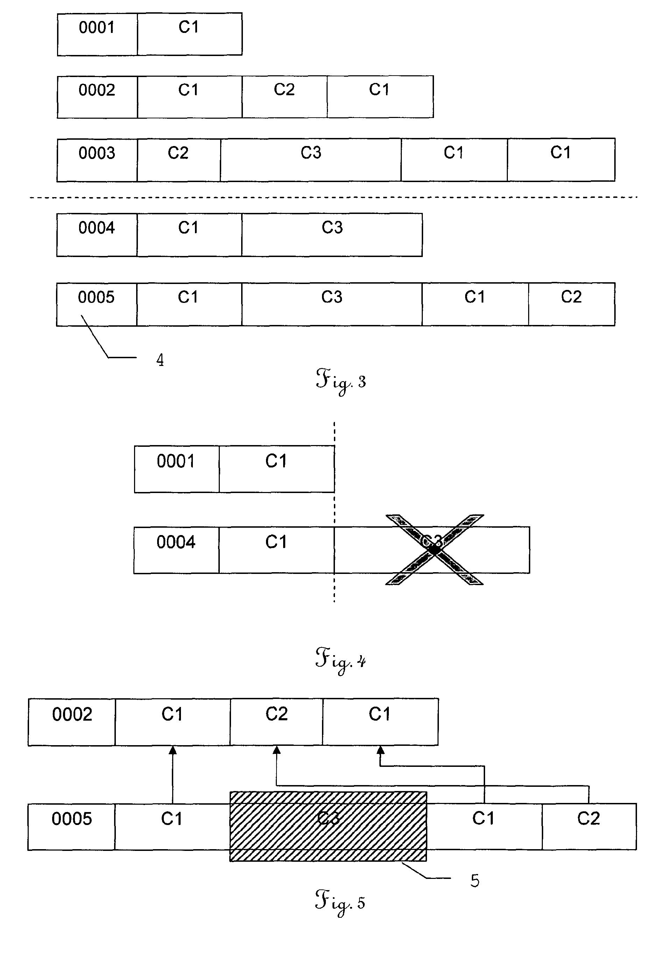

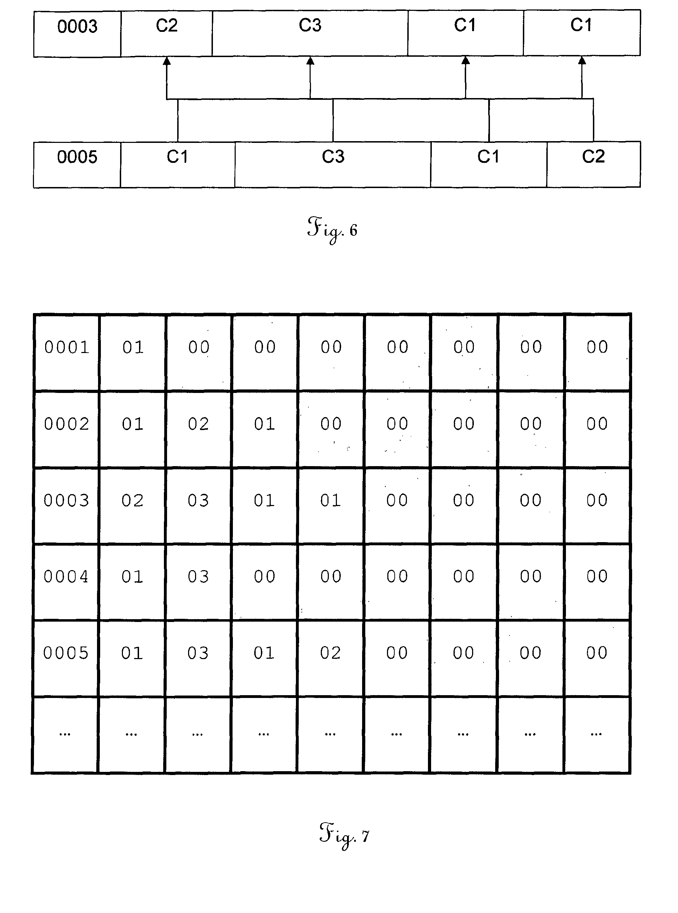

Fig.2 zeigt eine weitere Ausführungsform von Datenformaten des Stands der Technik. Dieses Beispiel ähnelt dem im Entwurf zum Standard RTCM 3.0 vorgesehenen Aufbau. Jedes Datenformat besitzt nun eine an den Anfang gestellten Codierung 4, die einen Anfangsteil des Datenformats darstellt. Auf diese Codierung 4 folgen mehrere Datenfelder C1, C2 und C3, deren Zahl und Reihenfolge für jedes Datenformat variieren kann, insbesondere können sich manche Datenfelder auch wiederholen, z.B. wenn die gleichen Datensätze verschiedener Satelliten beim differentiellen GNSS durch eine Referenzstation übertragen werden.

In Fig.3 sind zwei Gruppen von Datenformaten, die anhand ihrer Codierung 4 identifiziert werden. Von diesen Datenformaten sind die Versionen 0001, 0002 und 0003 bekannt und damit direkt verarbeitbar, die Datenformate 0004 und 0005 sind neu eingeführt und damit für ältere Geräte, die diese Datenformate in ihrer Software nicht berücksichtigen, nicht direkt verarbeitbar. Allerdings bestehen in diesem speziellen Fall die nicht direkt verarbeitbaren Datenformaten 0004 und 0005 aus Datenfeldern, die von dem Gerät bzw. der bestehenden Software grundsätzlich ausgewertet werden können.

Allerdings ist die jeweilige Sequenz der Datenfelder nicht bekannt, so dass keine Identifikation und Auswertung erfolgen kann.

Fig.4 zeigt eine erste Möglichkeit zur Nutzung auswertbarer Datenfelder in den nicht direkt verarbeitbaren Datenformaten aus Fig.3. Verfügt das Gerät über die Kenntnis der Sequenzen von Datenfeldern, kann das nicht direkt verarbeitbare Datenformat 0004 durch Weglassen oder Ausblenden der auf das Datenfeld C1 folgenden Daten als das bekannte Datenformat 0001 verarbeitet werden.

Die Fig.5 erläutert eine zweite Möglichkeit zur Nutzung auswertbarer Datenfelder in nicht direkt verarbeitbaren Datenformaten. Das nicht direkt verarbeitbare Datenformat 0005 kann nach Weglassen des Datenfeldes C3 so umgruppiert werden, das es dem direkt verarbeitbaren Datenformat 0002 entspricht. Ist nun die Sequenz der Datenfelder im nicht direkt verarbeitbaren Datenformat 0005 bekannt, so können beispielsweise beim Empfang des Datenformates die auswertbaren Datenfelder in Speichermitteln zwischengespeichert und dann in der Reihenfolge des direkt verarbeitbaren Datenformats 0002 aus den Speichermitteln ausgelesen werden. Gegenüber der verarbeitenden Software erscheint dann das direkt verarbeitbare Datenformat 0002.

In Fig.6 wird eine der Darstellung in Fig.5 ähnliche dritte Möglichkeit zur Nutzung auswertbarer Datenfelder in nicht direkt verarbeitbaren Datenformaten gezeigt, bei der allerdings keine Ausblendung von Datenfeldern erfolgt, sondern das nicht direkt verarbeitbare Datenformat 0005 nach einer Umordnung in ein direkt verarbeitbares Datenformat 0003 vollständig genutzt werden kann. Somit kann aus dem gleichen nicht direkt verarbeitbaren Datenformat 0005 unterschiedliche direkt verarbeitbare Datenformate 0002 oder 0003 abgeleitet werden.

Fig.7 zeigt ein Beispiel für ein erfindungsgemässes Referenzverzeichnisses mit unmittelbarer Angabe der Sequenz von Datenfeldern für die in Fig.3 exemplarisch eingeführten Datenformate. Die Datenformate werden zeilenweise beschrieben. Im ersten Feld einer Zeile steht die Codierung des Datenformates, die hier durch eine vierstellige Zahl erfolgt. Danach folgt eine fortlaufende Angabe der Datenfelder in ihrer Abfolge innerhalb des Datenformates. Alternativ kann auch mit Kenntnis der Bitstruktur der bekannten Datenfelder eine Zuordnung auf firmwareinterne Speicherbereiche vorgesehen werden. Nicht vorhandene Datenfelder bzw. das damit erreichte Ende des Datenformates wird durch die Angabe des Datenfeldes "00" angezeigt. Die gewählte Darstellungsform der Fig.7 erfolgt aus Gründen der Anschaulichkeit und definiert damit nicht notwendigerweise das Format eines in der Realität zu übertragenden Referenzverzeichnisses. Während der Übermittlung eines solchen Referenzverzeichnisses wird es sich aus Gründen des zu übertragenden Datenvolumens empfehlen, eine Kompression des Datenvolumens durch Reduzierung nicht genutzter Zeilen oder Spalten durchzuführen. Beispielsweise kann nach jeder vollständigen Beschreibung eines Datenformates ein entsprechendes Indikatorsignal (Stopsequenz) für das Ende der Zeile gesendet werden. Alternativ können aber auch andere geeignete Verfahren zur Kompression oder Übermittlung des Referenzverzeichnisses Verwendung finden.

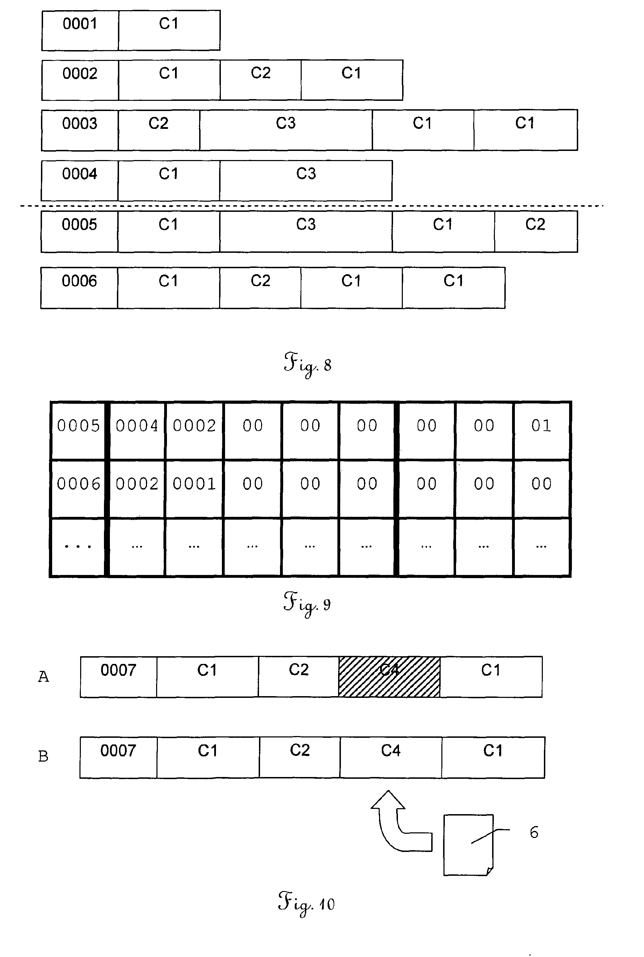

Fig.8 zeigt eine erste Gruppe aus direkt verarbeitbaren Datenformaten 0001-0004 und eine zweite Gruppe aus nicht direkt verarbeitbare Datenformaten 0005 und 0006.

In Fig.9 wird für die in Fig.8 dargestellten Gruppen von Datenformaten ein erfindungsgemässes Referenzverzeichnisses mit mittelbarer Angabe der Sequenz von Datenfeldern dargestellt. Die Beschreibung der nicht direkt verarbeitbaren Datenformate 0005 und 0006 erfolgt auf der Basis der Veränderungen gegenüber bekannten und direkt verarbeitbaren Datenformaten. In der ersten Zeile wird im ersten Feld die Codierung "0005" des betreffenden Datenformats angegeben. Die nachfolgenden beiden Felder dieser Zeile besagen, das die Sequenz der Datenfelder in diesem Datenformat den aufeinanderfolgenden Sequenzen der direkt verarbeitbaren Datenformate 0004 und 0002 entspricht, wobei allerdings noch ein Datenfeld Cl am Schluss der so aus bekannten Datenformaten gebildeten Sequenz wieder entfernt werden muss. Diese Notwendigkeit wird durch die Angabe "01" im letzten Feld der Zeile angezeigt. Damit erfolgt in diesem Beispiel die Angabe der konstituierenden bekannten und direkt verarbeitbaren Datenformate nach der Codierung in einer von links beginnenden Folge, während die Angabe der noch zu entfernenden Datenfelder am Ende der Zeile von rechts beginnend zu finden ist. In der zweiten Zeile ist eine gleichartige Angabe für das Datenformat 0006 aufgeführt. Hier ergibt sich das nicht direkt verarbeitbare Datenformat vollständig aus der Kombination der beiden direkt verarbeitbaren Datenformate 0002 und 0001.

Neben auswertbaren Datenfeldern können in nicht direkt verarbeitbaren Datenformaten jedoch auch neue und damit nicht auswertbare Datenfelder auftreten. In Fig.10 erfolgt eine schematische Darstellung der Handhabung von nicht auswertbaren Datenfeldern mit und ohne Verwendung eines Datenverzeichnisses. Dargestellt wird eine weiteres nicht direkt verarbeitbares Datenformat 0007. Die obere, mit A bezeichnete Variante beinhaltet das Ausblenden des unbekannten und nicht auswertbaren Datenfeldes durch das Gerät. Beim Empfangen der Mitteilung wird aus dem Referenzverzeichnis die Sequenz der Datenfelder entnommen und während des Empfangs bzw. während der nachfolgenden Auswertung das vierte Datenfeld C4 ausgeblendet bzw. nicht aus den Speichermitteln ausgelesen, so dass die Sequenz der Datenfelder das nicht auswertbare Datenfeld C4 nicht mehr enthält. Eine solche Sequenz entspricht dann dem direkt verarbeitbaren Datenformat 0002. Die untere, mit B bezeichnete Variante zeigt das Nutzen eines nicht auswertbaren Datenfeldes C4 durch Verwenden eines Datenverzeichnisses 6. In diesem Datenverzeichnis 6 sind die Informationen abgelegt, die es dem Gerät ermöglichen, die im nicht auswertbaren Datenfeld enthaltenen Daten dennoch zu nutzen.

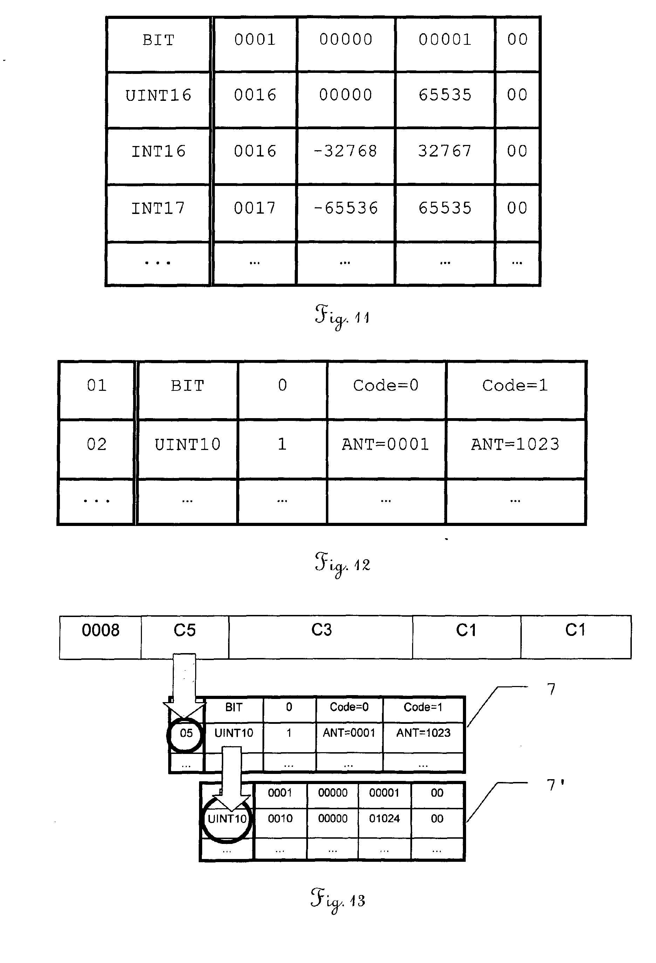

Fig.11 zeigt eine schematische Darstellung eines solchen erfindungsgemässen Datenverzeichnisses zur Definition von Datentypen. Das Datenverzeichnis enthält zeilenweise eine Definition von Datentypen. Hier wird beispielsweise in der ersten Zeile ein Datentyp "BIT" definiert. Die Bezeichnung wird im ersten Feld angegeben. Im zweiten Feld steht die Zahl der Bits, im dritten Feld der kleinste und im vierten Feld der grösste mögliche Wert des Datentyps. In diesem Fall stellt "BIT" einen rein binären Datentyp mit einer Länge von einem Bit und den möglichen Ausprägungen "0" und "1" dar. Ein solcher Datentyp kann beispielsweise als Flag Verwendung finden. In der nächsten Zeile wird beispielsweise der Datentyp "UINT16" festgelegt. Hierbei handelt es sich um einen Datentyp mit der Länge von 16 Bits, der einen Wertebereich von "0" bis "65535" umfasst. In der dritten und vierten Zeile erfolgt eine Definition der Datentypen "INT16" und "INT17", die auch negative Wertebereiche beinhalten. Nicht verwendete Felder im Datenverzeichnis werden in Analogie zu Fig.7 und Fig.9 mit dem Wert "00" belegt.

Eine schematische Darstellung eines weiteren erfindungsgemässen Datenverzeichnisses zur Definition von Datenfeldern zeigt Fig.12. In jeder Zeile wird ein Datenfeld definiert, wobei in diesem Beispiel auf die in Fig.11 festgelegten Datentypen zurückgegriffen wird. In der ersten Zeile wird das Datenfeld "01" definiert. Dieses ist vom Datentyp "BIT". Das nachfolgende Feld bezeichnet die Interpretation der nachfolgenden Felder. Steht hier eine "0" als Flag, so folgen nun Felder mit allen möglichen Ausprägungen des Wertebereichs dieses Datentyps. Durch eine "1" als Flag wird angezeigt, dass in den folgenden zwei Feldern jeweils der kleinste und der grösste zulässige Wert des Datentyps angegeben wird. In dieser ersten Zeile folgen nun alle möglichen Ausprägungen, die aufgrund des Datentyps nur "0" und "1" umfassen. In den Feldern werden diese Werte jeweils der Variablen "CODE" zugeordnet. Für dieses Beispiel bedeutet dies, dass die im Gerät existente Variable "CODE" hier die möglichen Werte "0" und "1" aus einem Datenformat auslesen kann, die hier exemplarisch für die zwei unterschiedlichen Codeformen "C/A Code" oder "P(Y) Code" eines GNSS-Satelliten stehen. Als ein weiteres Beispiel für ein ähnliches Datenfeld mit Indikatorwirkung kann auch das verwendete GNSS-System angegeben werden. Dann könnte durch einen Datentyp mit drei zulässigen Ausprägungen mittels der "0" das GPS-System, mittels der "1" das GLONASS-System und mittels "2" das GALILEO-System bezeichnet werden. In der zweiten Zeile wird das Datenfeld "02" definiert. Dieses ist vom Datentyp "UINT10" und aufgrund der "1" im dritten Feld ist erkennbar, dass im vierten Feld der kleinste und im fünften Feld der grösste zulässige Wert des Datenfeldes angegeben wird. In diesem Beispiel werden diese Werte der Variablen "ANT" zugewiesen, die dem technischen Parameter der Antennenhöhe entspricht.

Ein solches Datenverzeichnis kann nun beispielsweise verwendet werden, um ältere Geräte, die nur zwei GNSS-Systeme und eine grobe Unterteilung der Antennenhöhe kennen, auch für Daten mit mehr als zwei Systemen und einer feineren Unterteilung der Antennenhöhe verwendbar zu machen. Im Fall der Zahl der Systeme wird dem alten Gerät der neue Datentyp und das neue Datenfeld durch das Datenverzeichnis mitgeteilt. Wenn eine allgemein akzeptierte Variablenbezeichnung für die verwendbaren Systeme, wie z.B. "GNSS", existiert, kann das alte Gerät aus dem Datenverzeichnis entnehmen, dass die von ihm verarbeitbaren GNSS-Systeme jeweils durch die ersten beiden zulässigen Ausprägungen des Wertebereichs des Datentyps bzw. Datenfeldes indiziert werden.

Im Fall der Antennenhöhe kann die Situation eintreten, dass die verwendete Auflösung erhöht wird und nicht mehr nur 1024 Werte als Unterteilung der Antennenhöhe gesendet werden, sondern 4096. Aus den Angaben des Datenverzeichnisses können nun Unter- und Obergrenze des Wertebereichs entnommen werden, so dass eine Zuordnung der neuen, feineren Werte zur gröberen, alten Unterteilung möglich wird. In diesem Beispiel soll angenommen werden, dass der alte Wertebereich von "0" bis "1023" reicht und eine Unterteilung in 1024 Werte beinhaltet. Das neue Datenfeld weist einen Wertebereich von "0" bis "2047" auf und verwendet einen Datentyp mit 12 Bit und damit einer Unterteilung in 4095 Werte. Damit kann das alte Programm weiterarbeiten, wenn es die obere Hälfte des Wertebereichs in der Auswertung abschneidet, da diese Werte über den ursprünglichen Bereich hinausgehen. Für die untere Hälfte muss nun berücksichtigt werden, dass jeweils zwei Werte der neuen Skala einem Wert der alten Skala entsprechen. Damit muss das Gerät jeweils zwei zusammenhängende Werte als einem alten Wert entsprechend interpretieren. Beispielsweise würden die Werte "0" und "1" im neuen Datenfeld vom Gerät in beiden Fällen als "0" interpretiert. Der im neuen Datenfeld übermittelte Wert "2843" könnte nicht verarbeitet werden und würde beispielsweise zu einer Fehlermeldung oder der Verwendung des im Gerät zulässigen grösstmöglichen Wertes "1023" als Ersatz führen. Die Voraussetzung für eine solche Anwendbarkeit eines erfindungsgemässen Datenverzeichnisses stellt eine entsprechende Berücksichtigung einer solchen Funktionalität in der Entwicklung der alten Software dar.

Grundsätzlich besteht auch die Möglichkeit, die Datentypen und Datenfelder in einer der Datenformate analogen Weise über die Angabe der Veränderung von bekannten und auswertbaren Datenfeldern bzw. Datentypen zu definieren.

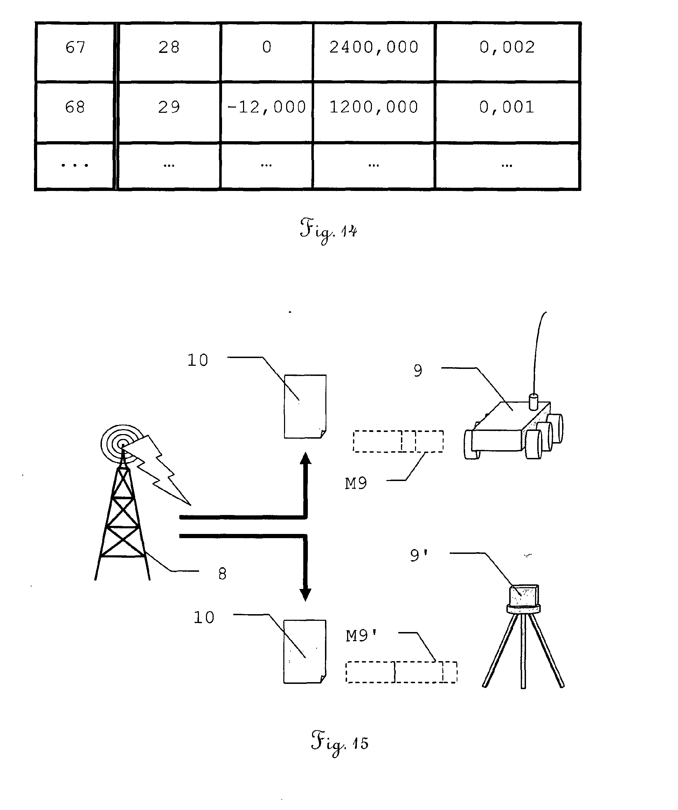

Fig.13 zeigt eine schematische Darstellung der Zusammenhänge von Datentypen, Datenfeldern und Datenformaten. Im Datenverzeichnis 7' erfolgt die Festlegung der Datentypen, während durch das Datenverzeichnis 7 die Datenfelder definiert werden. Ein im Datenformat 0008 vorkommendes Datenfeld 05 kann im Datenverzeichnis 7 aufgefunden werden, wo es als Datentyp UINT10 festgelegt ist. Die Spezifikation dieses Datentyps kann im Datenverzeichnis 7' gefunden werden.

Weiterhin können auch Datenfelder und deren Inhalt mit abstrakten Kennzeichnungen, zum Beispiel einer Kennsequenz und anschliessend einer durchgehenden Numerierung, versehen werden. Neue Datenfelder mit einer neu vergebenen Sequenz können in einem Datenverzeichnis wie in Fig.14 abgelegt werden. In diesem Datenverzeichnis werden die neuen, nicht auswertbaren Datenfelder 67 und 68 auf der Basis der auswertbaren Datenfelder 28 und 29 festgelegt. In der ersten Zeile wird das nicht auswertbare Datenfeld 67 neu eingeführt, das auf dem auswertbaren Datenfeld 28 beruht, für das aber ein neuer Wertebereich mit den Werten zwischen 0 und 2400,000, sowie eine Auflösung von 0,002 festgelegt ist. Die Definition des Dateninhaltes und die nachfolgende Datenverarbeitung werden von der Definition des Datenfeldes 28 übernommen. Die nächste Zeile definiert eine eventuelle Veränderung des Wertebereiches und der Auflösung für das Datenfeld 29 durch Angabe des neuen nicht auswertbaren Datenfeldes 68 und des zugehörigen Wertebereichs bzw. der Auflösung.

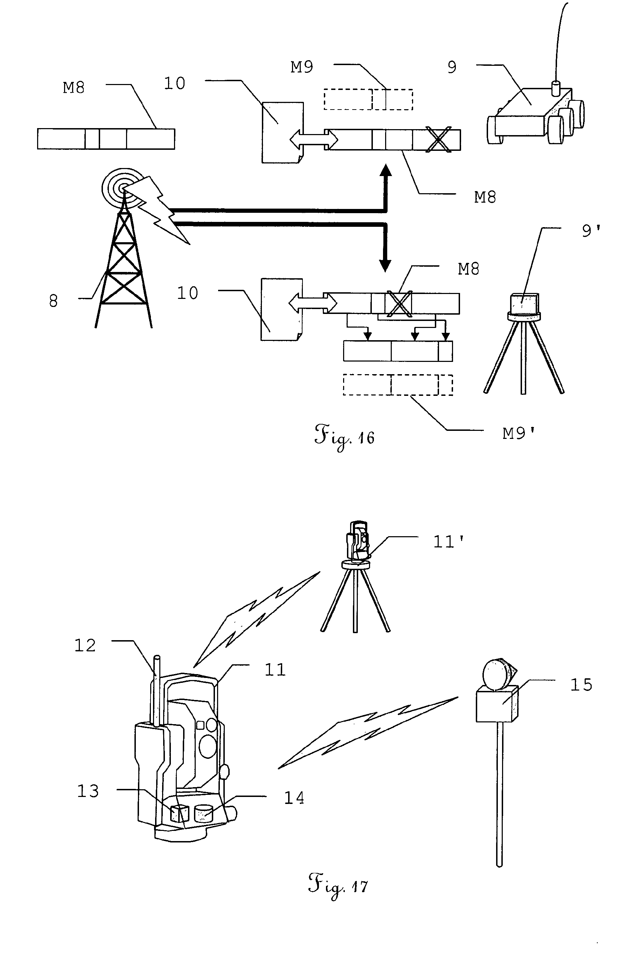

Fig.15 beinhaltet eine schematische Darstellung eines Beispiels der Übertragung eines Referenzverzeichnisses 10 mit einem erfindungsgemässen Verfahren. Eine DGNSS-Referenzstation 8 als erstes Gerät überträgt bei Aufbau der Kommunikation das Referenzverzeichnis 10 zu einem Rover 9 und einem Theodoliten 9' als innerhalb des Sendebereichs befindliche zweite Geräte.

Alternativ oder ergänzend kann jedoch auch eine periodische Ausstrahlung eines aktuellen Referenz- oder Datenverzeichnisses im Broadcast-Betrieb erfolgen, so dass alle innerhalb des Empfangsbereich befindliche Stationen das Verzeichnis empfangen können. Das hier im folgenden dargestellte Verfahren stellt lediglich eine beispielhafte Möglichkeit der erfindungsgemässen Übertragung im bidirektionalen Modus dar. Eine Anwendung für ein unidirektionales Verfahren ist erfindungsgemäss gleichfalls möglich.

Die Software des Rovers 9 ist so ausgelegt, dass sie nur ein Datenformat M9 direkt verarbeiten kann, während dies beim Theodoliten 9' ausschliesslich für das Datenformat M9' gilt. Im nächsten Schritt, der in Fig.16 schematisch dargestellt wird, erfolgt eine Übermittlung von Daten im Format M8 von der DGNSS-Referenzstation 8 zu den zweiten Geräten 9 und 9'. Diese empfangen das nicht direkt verarbeitbare Datenformat M8 und können mit Hilfe des Referenzverzeichnisses 10 auswertbare Datenfelder identifizieren bzw. lokalisieren Hierdurch können die direkt verarbeitbaren Datenformate M9 bzw. M9' abgeleitet und somit die übermittelten Daten - zumindest teilweise - genutzt werden.

Fig.17 zeigt die schematische Darstellung eines ersten Theodoliten 11 mit weiteren Geräten als Beispiel eines erfindungsgemässen Systems. Der erste Theodolit 11 und wenigstens ein intelligenter Reflektor 15 sind als zweite Geräte zusammen mit einem weiteren Theodoliten 11' als erstem Gerät Bestandteil eines erfindungsgemässen Systems, in dem zwischen allen Komponenten eine Kommunikation erfolgt. Der erste Theodolit 11 weist hierfür Kommunikationsmittel 12 auf, die in Verbindung mit einem Computer als Mitteln zum Verarbeiten der nutzbaren Daten 13 und Speichermitteln 14 in den ersten Theodoliten 11 integriert sind. Zu Beginn der Kommunikationsverbindung übermittelt der weitere Theodolit 11' an alle zweiten Geräte ein Referenzverzeichnis. Dieses Referenzverzeichnis wird im ersten Theodoliten 11 durch die Kommunikationsmittel 12 empfangen und in den Speichermitteln 14 abgelegt. In nachfolgend zwischen den Geräten übertragenen Datenformaten können dann aufgrund des Referenzverzeichnisses auswertbare Datenformate, gegebenenfalls unter Zuhilfenahme ebenfalls übertragener Datenverzeichnisse, lokalisiert und die enthaltenen Daten genutzt werden. Im Theodoliten 11 werden die Daten hierzu durch die Kommunikationsmittel 12 empfangen und von den Mitteln zum Verarbeiten der nutzbaren Daten 13 ausgewertet. Hierzu greifen die Mittel zum Verarbeiten der nutzbaren Daten 13 auf das in den Speichermitteln 14 abgelegte Referenzverzeichnis zu. In diesem Zusammenhang soll keine Unterscheidung hinsichtlich der Realisierung von Auswertungs- und Datenverarbeitungsmitteln getroffen werde. Das erfindungsgemässe Verfahren betrifft alle rechnergestützten Realisierungen, unabhängig von der konkreten Verkörperungsform des Programmablaufs in Schaltungsform, Firmware oder aufspielbarer Software.

Die dargestellten Ausführungsformen stellen nur Beispiele für erfindungsgemässe Realisierungen dar und sind daher nicht abschliessend und einschränkend zu verstehen. Darüber hinaus kann der Fachmann weitere erfindungsgemässe Ausführungsformen ableiten, z.B. unter Verwendung alternativer Formen der Datenhaltung und Datenverarbeitung. Insbesondere können alternative Ausgestaltungen von Verzeichnissen verwendet werden, wobei insbesondere auch Zusammenfassungen von Daten- und Referenzverzeichnissen in einem oder mehreren aggregierten Verzeichnissen realisierbar sind.

## Patentansprüche

1. Verfahren zur Verwendung von nutzbaren Daten in nicht direkt verarbeitbaren Datenformaten bei der, insbesondere drahtlosen, Kommunikation zwischen wenigstens zwei geodätischen Geräten mit
einem ersten Gerät (8,11') mit Kommunikationsmitteln,
einem zweiten Gerät (9,9',11,15) mit
• Kommunikationsmitteln (12)
• Mitteln zum Verarbeiten der nutzbaren Daten (13) und
• Speichermitteln (14),
mit den Schritten
- Senden von Daten durch das erste Gerät (8,11'), wobei die Daten in Datenformaten mit einer Sequenz aus wenigstens zwei Datenfeldern gesendet werden,
- Empfangen der Daten und Verarbeiten von nutzbaren Daten durch das zweite Gerät (9,9',11,15), wobei aus auswertbaren Datenfeldern die nutzbaren Daten gelesen werden,
**dadurch gekennzeichnet, dass,**
insbesondere in Zusammenhang mit dem Senden der Daten, wenigstens ein Referenzverzeichnis (10) übertragen und in den Speichermitteln (14) gespeichert wird, wobei das Referenzverzeichnis (10) in nicht direkt verarbeitbaren Datenformaten die auswertbaren Datenfelder indiziert.

2. Verfahren nach Anspruch 1,
**dadurch gekennzeichnet, dass**
ein Datenverzeichnis übertragen wird, in dem Datenfelder und/oder Datentypen definiert werden.

3. Verfahren nach Anspruch 1 oder 2,
**dadurch gekennzeichnet, dass**
die Datenformate durch eine, insbesondere eine numerische oder alphanumerische, Codierung (4) eindeutig bezeichnet werden.

4. Verfahren nach einem der vorangehenden Ansprüche,
**dadurch gekennzeichnet, dass**
in einem der Datenformate wenigstens ein Datenfeld mit einer fixen Länge gewählt wird, insbesondere mit einer durch das Format geodätischer Orts- oder Zeitangaben bedingten Länge.

5. Verfahren nach einem der vorangehenden Ansprüche,
**dadurch gekennzeichnet, dass**
beim Empfangen der Daten oder Verarbeiten von nutzbaren Daten wenigstens ein nicht auswertbares Datenfeld im nicht direkt verarbeitbaren Datenformat unterdrückt wird, so dass nur eine Sequenz von auswertbaren Datenfeldern empfangen und/oder ausgewertet wird.

6. Verfahren nach einem der vorangehenden Ansprüche,
**dadurch gekennzeichnet, dass**
beim Empfangen der Daten oder Verarbeiten von nutzbaren Daten in nicht direkt verarbeitbaren Datenformaten wenigstens ein auswertbares Datenfeld innerhalb der Sequenz von Datenfeldern lokalisiert wird.

7. Verfahren nach einem der vorangehenden Ansprüche,
**dadurch gekennzeichnet, dass**
die Indizierung auswertbarer Datenfelder im Referenzverzeichnis (10) durch wenigstens eine der beiden Massnahmen erfolgt
- Angeben der Folge von Datenfeldern in nicht direkt verarbeitbaren Datenformaten, so dass auswertbare Datenfelder lokalisierbar sind,
- Angeben einer Veränderung bekannter Datenformate, so dass die Folge von Datenfeldern in den nicht direkt verarbeitbaren Datenformaten ableitbar und auswertbare Datenfelder lokalisierbar sind.

8. Verfahren nach einem der vorangehenden Ansprüche,
**dadurch gekennzeichnet, dass**
beim Senden der Daten das erste Gerät Daten (8,11') an mehrere zweite Geräte (9, 9', 11, 15) übermittelt.

9. Verfahren nach einem der vorangehenden Ansprüche,
**dadurch gekennzeichnet, dass**
die Übertragung des Referenzverzeichnisses (10) durch wenigstens eine der folgenden Massnahmen ausgelöst wird
- Aufbauen einer Kommunikationsverbindung zwischen erstem (8, 11') und zweiten Gerät (9,9',11,15),
- Erkennen einer gesetzten Zeitmarke, insbesondere periodischen Zeitmarke, während der Existenz einer Kommunikationsverbindung zwischen erstem Gerät (8,11') und zweitem Gerät (9,9',11,15),
- Ablaufen eines Zählvorganges,
- Ausführen eines definierten Vorgangs im ersten Gerät (8,11'),
- Übermitteln einer Meldung durch das zweite Gerät (9,9',11,15), dass ein nicht direkt verarbeitbares Datenformat empfangen wird oder wurde,
- Übermitteln einer Meldung durch das zweite Gerät (9, 9', 11, 15), in der die durch dieses zweite Gerät (9, 9', 11, 15) direkt verarbeitbaren Datenformate bezeichnet sind.

10. Computerprogrammprodukt mit Programmcode, der auf einem maschinenlesbaren Träger gespeichert ist, zur Durchführung des Schrittes Empfangen der Daten und Verarbeiten von nutzbaren Daten des Verfahrens nach einem der Ansprüche 1 bis 9, insbesondere wenn das Programm in einem Computer (13) ausgeführt wird.

11. Analoges oder digitales Computer-Daten-Signal, verkörpert durch eine elektromagnetische Welle, mit einem Programmcode-Segment zur Durchführung des Schrittes Empfangen der Daten und Verarbeiten von nutzbaren Daten des Verfahrens nach einem der Ansprüche 1 bis 9, insbesondere wenn der Programmcode in einem Computer (13) ausgeführt wird.

12. Referenzverzeichnis (10) oder Datenverzeichnis als Code, der auf einem maschinenlesbaren Träger gespeichert ist, zur Durchführung des Verfahrens nach einem der Ansprüche 1 bis 9, insbesondere wenn der Code in einem Computer (13) verwendet wird.

13. Referenzverzeichnis (10) oder Datenverzeichnis als analoges oder digitales Computer-Daten-Signal, verkörpert durch eine elektromagnetische Welle mit einem Code-Segment zur Durchführung des Verfahrens nach einem der Ansprüche 1 bis 9, insbesondere wenn das Code-Segment in einem Computer (13) verwendet wird.

14. Geodätisches Gerät, insbesondere Referenzstation für differentielles GNSS oder Theodolit, als erstes Gerät (8,11') zur Durchführung des Verfahrens nach einem der Ansprüche 1 bis 9, mit Kommunikationsmitteln,
**dadurch gekennzeichnet, dass**
die Kommunikationsmittel (12) zur Übertragung eines Referenzverzeichnisses (10) oder Datenverzeichnisses ausgelegt sind.

15. Geodätisches Gerät nach Anspruch 14,
**dadurch gekennzeichnet, dass**
die Kommunikationsmittel (12) so ausgebildet sind, dass die Übertragung des Referenzverzeichnisses (10) oder des Datenverzeichnisses durch wenigstens eines der folgenden Ereignisse ausgelöst wird
- Aufbau einer Kommunikationsverbindung zu einem zweiten Gerät (9,9',11,15),
- Erkennung einer gesetzten Zeitmarke, insbesondere einer periodischen Zeitmarke,
- Ende eines Zählvorganges,
- Ausführung eines definierten Vorgangs,
- Empfang einer Warnmeldung eines zweiten Geräts (9,9',11,15), dass ein nicht direkt verarbeitbares Datenformat empfangen wird oder wurde,
- Empfang einer Meldung eines zweiten Geräts (9,9',11,15), in der die durch dieses zweite Gerät (9,9',11,15) direkt verarbeitbaren Datenformate bezeichnet sind.

16. Geodätisches Gerät, insbesondere Rover für differentielles GNSS, als zweites Gerät (9,9',11,15) zur Durchführung des Verfahrens nach einem der Ansprüche 1 bis 8, mit
• Kommunikationsmitteln (12)
• Mitteln zum Verarbeiten von nutzbaren Daten (13) und
• Speichermitteln (14),
**dadurch gekennzeichnet, dass**
die Kommunikationsmittel (12) und die Speichermittel (14) so ausgebildet und angeordnet sind, dass ein
Referenzverzeichnis (10) oder ein Datenverzeichnis empfangen und gespeichert wird.

17. Geodätisches Gerät nach Anspruch 15,
**dadurch gekennzeichnet, dass**
die Kommunikationsmittel (12) oder die Mittel zum Verarbeiten von nutzbaren Daten (13) so ausgelegt sind, dass in nicht direkt verarbeitbaren Datenformaten enthaltene und auswertbare Datenfelder durch die Indizierung im Referenzverzeichnis (10) identifiziert werden.

18. Geodätisches Gerät nach einem der Ansprüche 15 bis 16,
**dadurch gekennzeichnet, dass**
die Kommunikätionsmittel (12) oder die Mittel zum Verarbeiten von nutzbaren Daten (14) so ausgelegt sind, dass nicht auswertbare Datenfelder im nicht direkt verarbeitbaren Datenformat während des Empfangs der Daten oder des Verarbeitens von nutzbaren Daten unterdrückt werden.

19. Geodätisches Gerät nach einem der Ansprüche 15 bis 17,
**dadurch gekennzeichnet, dass**
die Kommunikationsmittel (12) oder die Mittel zum Verarbeiten von nutzbaren Daten (14) so ausgelegt sind, dass auswertbare Datenfelder im nicht direkt verarbeitbaren Datenformat während des Empfangens der Daten oder des Verarbeitens von nutzbaren Daten innerhalb der Sequenz von Datenfeldern lokalisiert werden.

20. Geodätisches System, insbesondere differentielles GNSS-System, zur Durchführung des Verfahrens nach einem der Ansprüche 1 bis 8 mit
wenigstens einem ersten Gerät (8,11') nach Anspruch 13 und
wenigstens einem zweiten Gerät (9,9',11,15) nach einem der Ansprüche 14 bis 18.
